# EUROPEAN PATENT SPECIFICATION

(11) **EP 0 791 996 B1**
(45) Date of publication and mention of the grant of the patent: **06.03.2002**
(21) Application number: 97100923.8
(22) Date of filing: 22.01.1997
(51) Int. Cl.: H02G 3/30

(54) **Fastening device for cable harnesses, method for manufacture thereof and use of the fastening device**
Befestigungsvorrichtung für Kabelbäume, Herstellungsverfahren dafür und Verwendung der Befestigungsvorrichtung
Dispositif de fixation de faisceaux de câbles, procédé de sa fabrication et utilisation du dispositif de fixation

(30) Priority: 22.02.1996 DE 19606643
(43) Date of publication of application: 27.08.1997
(73) Proprietor: ITW-ATECO GmbH, D-22844 Norderstedt (DE)
(72) Inventor: Jonatzke, Volker, 58640 Iserlohn (DE)
(74) Representative: Patentanwälte Hauck, Graalfs, Wehnert, Döring, Siemons

(56) References cited:
- DE-A- 4 324 466
- US-A- 4 870 722

## Description

The invention refers to the fastening of cable harnesses or similar collected supply lines to holes of a supporting structure. In particular the invention refers to the attachment of cable harnesses to holes in frames of vehicles or electric devices.

Up to now cable clips are pre-assembled at the vehicle in the automotive industry for the attachment of a cable harness, whereafter the cable harness is placed in respective accommodation means of the clips which thereafter are closed. This makes the assembly expensive. Known constructions can be assembled more easily wherein the clips are part of the cable harness. As to this, it is necessary that the clips are positioned on the cable harness such that they conform to the holes formed in the frame. For this reason the attachment of the clips with tapes or the like is expensive and sometimes not applicable due to the missing accuracy. Furthermore, clips for the attachment of a cable harness are known including a cable band injection-molded thereto. These clips can be relatively easily assembled at predetermined positions of the cable harness. However, it is disadvantageous that through the cutting of protruding parts of the cable band a sharp edge is generated which may hurt the operator when installing the cable harness.

DE 43 24 466 discloses a cable harness provided with a reinforced element to which lines are attached. The reinforced element is fastened to a supporting structure with the help of clips. The clips are inserted into holes of the reinforced element.

It is an object of the invention to provide an improved attachment means for a cable harness, a simple method for the manufacture thereof and an advantageous use for such attachment means.

Solutions of the problem are recited in patent claims 1, 14 and 18. Advantageous developments thereof are recited in subclaims.

In the fastening device according to the invention the clips are located on a flexible joining element. The clips may be displaceable, fixedly attached or attached at the predetermined positions to the joining element. Preferably, the clips are injection-molded to the flexible joining element. The flexible joining element may have approximately the length of the cable harness. It is integrated in the cable harness like an electric cable. In this embodiment the clips with their snapping shanks are positioned on the outer side of the cable harness at the mentioned positions which are associated with holes in the supporting structure. The clips are provided with an elongated head which can be aligned with the extension of the cable. The clips can be positioned on the flexible joining element such that a simple integration thereof results in the desired positions of the clips on the cable harness.

The attachment technique according to the invention has the advantage that it simplifies the manufacture of a cable harness with pre-assembled clips. It facilitates the positioning of the clips on the cable harness within narrow tolerances, with the spaces between the clips may vary. This in turn simplifies the assembly because the pre-assembled cable harnesses can be easily attached to holes of the supporting structure. For the compensation of remaining tolerances the flexibility of the cable harness can be used or in another embodiment the holes are provided with an oblong shape. The invention further results in a standardization in that the same clips can be used for cable harnesses having a small number of cables or for those having a large number of cables, respectively. No sharp edges occur which may hurt the operator.

Two embodiment examples are subsequently described in some detail along accompanying drawings. In the drawings
- Fig. 1: shows a side view of an embodiment of the invention with conical clips and
- Fig. 2: shows a second embodiment according to the invention in a side view with eagle clips.

Both Figures show merely a portion 1, 1' of a fastening device having a plurality of identical clips 2, 2' at a flexile ribbon 3, 3'.

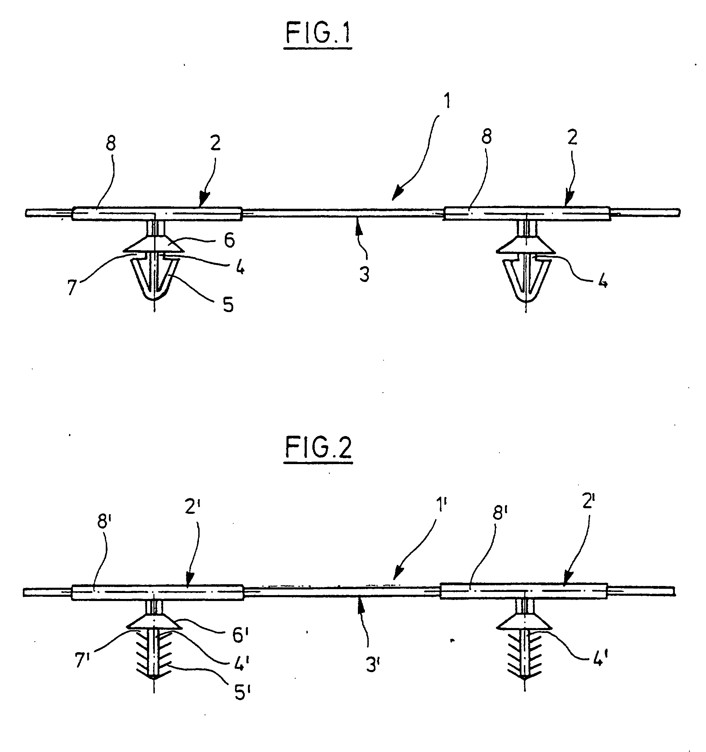

According to Fig. 1 the clips 2 have a shank 4 including a conical portion 5 which is axially slotted in the medium portion in order to promote a radial flexibility upon penetration into a hole. Above the conical portion 5 shank 4 has a flange 6 which is supported on the outer side of the structure having the hole. A groove 7 is provided between the conical portion 5 and flange 6 for the accommodation of a sheet wherein holes are provided.

A tube-like element 8 extends transverse to shank 4 above flange 6. The ribbon 3 is extended through the tubular elements 8 of adjacent clips. Ribbon 3 can be made of synthetic material, e.g. of polyamide. The clips 2 can be made of a thermoplastic material and fixed to ribbon 3 by injection-molding at predetermined spaces. The ribbon 3 including the tubular elements 8 of fastening device 1 can be integrated in a cable harness like a cable. The integration has to be carried out such that the conical portions 5 project outwardly from the cable harness at a predetermined position so that they can be attached to the holes of a supporting structure. The projection is promoted by the length of the shanks 4 of the clips 2.

The snapping performance of the clips can be achieved by known constructions of the prior art. For example, so-called "eagle clips" can be used. In such an embodiment barb-like elements 5' are provided on shank 4' as shown in Fig. 2. By the way, the construction of Fig. 2 essentially corresponds to that of Fig. 1 which is indicated by respective reference numbers including a hyphen.

## Claims

1. Fastening device for fastening a cable harness or other collected supply lines to holes in a supporting structure especially in a vehicle chassis, comprising a flexible joining element (3; 3') and several clips (2; 2') each of said clips having a shank (4; 4') which can be snapped into one of said holes and being provided with a head on the top of said shank, **characterized in that**
said head comprises an elongated element (8; 8') which can be aligned with the extension of said cable, said elongated element extends transverse to said shank and
**in that** said joining element is attached to said heads of said clips.

2. Device according to claim 1, **characterized in that** said heads are rod-shaped and extend perpendicularly to said shanks of said clips.

3. The device according to claim 2, **characterized in that** said heads are connected to said flexible joining element at their outer circumference.

4. The device according to claim 3, **characterized in that** said heads are tubular and extend perpendicularly to said shanks of said clips and **in that** said flexible joining element is extended through said heads.

5. The device according to claim 1, **characterized in that** said clips are displaceable along said flexible joining element.

6. The device according to claim 1, **characterized in that** said clips are fixed to said flexible joining element at predetermined spaced intervals.

7. The device according to claim 6, **characterized in that** said clips are attached to said flexible joining element by heat sealing.

8. The device according to claim 6, **characterized in that** said clips are attached to said flexible joining element by injection molding.

9. The device according to claim 1, **characterized in that** said clips and/or said flexible joining element is made from plastics.

10. The device according to claim 1, **characterized in that** said flexible joining element is a band.

11. The device according to claim 1, **characterized in that** said flexible joining element is a cord.

12. The device according to claim 1, **characterized in that** said flexible joining element is solid in cross section.

13. The device according to claim 1, **characterized in that** said flexible joining element is a braid of twisted or flexible elements.

14. A method for the production of a device according to claim 1, **characterized in that** said flexible joining element is transported step by step through a casting mold of an injection molding device, the extend of a stepwidth corresponding to predetermined spaces between said clips on said joining element and **in that** in the time interval between said transporting steps said clip is injection molded to said flexible joining element.

15. The method according to claim 14, **characterized in that** said flexible joining element is severed after a predetermined number of steps.

16. The method according to claim 14 and 15, **characterized in that** a plurality of parallel said flexible joining elements are transported step by step through a plurality of parallel molds of said injection molding device.

17. The method according to claim 16, **characterized in that** said parallel flexible elements each are transported with equal width of said steps.

18. An application of the device according to claim 1, for fixing a cable harness to holes of a supporting structure, said flexible joining element being included in said cable harness like said cable.

19. The application according to claim 18, **characterized in that** said clips are arranged in defined positions on the outer side of said cable harness.

20. The application according to claim 17 or 18, **characterized in that** said holes are oblong for the compensation for tolerances.

## Patentansprüche

1. Einrichtung zum Befestigen von Kabelbäumen oder anderen zusammengefaßten Versorgungsleitungen an Löchern einer Tragkonstruktion, insbesondere eines Fahrzeugrahmens, mit einem flexiblen Verbindungselement (3; 3') und mehreren Clipsen (2; 2'), wobei jeder der Clipse einen Schaft (4; 4') besitzt, der in eines der Löcher einschnappbar ist und mit einem Kopf an dem oberen Ende versehen ist, **dadurch gekennzeichnet, daß**
jeder Kopf ein längliches Element (8; 8') aufweist, das in Kabelrichtung ausrichtbar ist, wobei das längliche Element sich quer zum Schaft erstreckt, und
das Verbindungselement mit den Köpfen der Clipse verbunden ist.

2. Einrichtung nach Anspruch 1, **dadurch gekennzeichnet, daß** die Köpfe stangenförmig und senkrecht zu den Schäften der Clipse ausgerichtet sind.

3. Einrichtung nach Anspruch 2, **dadurch gekennzeichnet, daß** die Köpfe an ihrem Außenumfang mit dem flexiblen Verbindungselement verbunden sind.

4. Einrichtung nach Anspruch 3, **dadurch gekennzeichnet, daß** die Köpfe röhrchenförmig und senkrecht zu den Schäften der Clipse ausgerichtet sind und das flexible Verbindungselement durch die Köpfe geführt ist.

5. Einrichtung nach Anspruch 1, **dadurch gekennzeichnet, daß** die Clipse entlang dem elastischen Verbindungselement verstellbar sind.

6. Einrichtung nach Anspruch 1, **dadurch gekennzeichnet, daß** die Clipse in vorbestimmten Abschnitten an dem flexiblen Verbindungselement fixiert sind.

7. Einrichtung nach Anspruch 6, **dadurch gekennzeichnet, daß** die Clipse mit dem flexiblen Verbindungselement verschweißt sind.

8. Einrichtung nach Anspruch 6, **dadurch gekennzeichnet, daß** die Clipse an das flexible Verbindungselement gespritzt sind.

9. Einrichtung nach Anspruch 1, **dadurch gekennzeichnet, daß** die Clipse und/oder das flexible Verbindungselement aus Kunststoff sind.

10. Einrichtung nach Anspruch 1, **dadurch gekennzeichnet, daß** das flexible Verbindungselement ein Band ist.

11. Einrichtung nach Anspruch 1, **dadurch gekennzeichnet, daß** das flexible Verbindungselement eine Schnur ist.

12. Einrichtung nach Anspruch 1, **dadurch gekennzeichnet, daß** das flexible Verbindungselement einen Vollquerschnitt hat.

13. Einrichtung nach Anspruch 1, **dadurch gekennzeichnet, daß** das flexible Verbindungselement aus flexiblen Elementen geflochten oder geschlagen ist.

14. Einrichtung zum Herstellen einer Einrichtung nach Anspruch 1, **dadurch gekennzeichnet, daß** ein flexibles Verbindungselement schrittweise durch eine Spritzgußform einer Spritzeinrichtung transportiert wird, wobei die Schrittweiten vorbestimmten Abständen der Clips auf dem Verbindungselement entsprechen, und daß zwischen den Förderschritten jeweils ein Clip an das flexible Verbindungselement angespritzt wird.

15. Verfahren nach Anspruch 14, **dadurch gekennzeichnet, daß** das flexible Verbindungselement nach einer vorbestimmten Anzahl von Schritten abgetrennt wird.

16. Verfahren nach Anspruch 14 oder 15, **dadurch gekennzeichnet, daß** mehrere parallele flexible Verbindungselemente durch mehrere parallele Spritzgußformen einer Spritzgußeinrichtung schrittweise transportiert werden.

17. Verfahren nach Anspruch 16, **dadurch gekennzeichnet, daß** die parallelen flexiblen Elemente jeweils mit gleicher Schrittweite transportiert werden.

18. Verwendung einer Einrichtung nach Anspruch 1 zum Befestigen von Kabelbäumen an Löchern einer Tragkonstruktion, bei der das flexible Verbindungselement wie ein Kabel in den Kabelbaum eingebunden wird.

19. Verwendung nach Anspruch 18, bei der Clipse in definierten Positionen an den Außenseiten des Kabelbaumes angeordnet sind.

20. Verwendung nach Anspruch 17 oder 18, bei der die Löcher zum Ausgleich von Toleranzen Langlöcher sind.

## Revendications

1. Dispositif de fixation destiné à fixer un faisceau de câblés ou autres lignes d'alimentation rassemblées à des trous dans une structure de support, en particulier dans un châssis de véhicule, comprenant un élément de jonction flexible (3 ; 3') et plusieurs agrafes (2 ; 2') chacune desdites agrafes comportant un corps (4 ; 4') qui peut être encliqueté dans l'un desdits trous et étant muni d'une tête au sommet dudit corps, **caractérisé en ce que**
ladite tête comprend un élément allongé (8 ; 8') qui peut être aligné avec l'extension dudit câble, ledit élément allongé s'étend transversalement audit corps et
**en ce que** ledit élément de jonction est fixé auxdites têtes desdites agrafes.

2. Dispositif selon la revendication 1, **caractérisé en ce que** lesdites têtes sont en forme de tige et s'étendent perpendiculairement audit corps desdites agrafes.

3. Dispositif selon la revendication 2, **caractérisé en ce que** lesdites têtes sont reliées audit élément de jonction flexible au niveau de leur circonférence extérieure.

4. Dispositif selon la revendication 3, **caractérisé en ce que** lesdites têtes sont tubulaires et s'étendent perpendiculairement auxdits corps desdites agrafes et **en ce que** ledit élément de jonction souple est étendu au travers desdites têtes.

5. Dispositif selon la revendication 1, **caractérisé en ce que** lesdites agrafes peuvent êtres déplacées le long dudit élément de jonction souple.

6. Dispositif selon la revendication 1, **caractérisé en ce que** lesdites agrafes sont fixées audit élément de jonction souple à des intervalles espacés de façon prédéterminée.

7. Dispositif selon la revendication 6, **caractérisé en ce que** lesdites agrafes sont fixées audit élément de jonction souple par scellage à chaud.

8. Dispositif selon la revendication 6, **caractérisé en ce que** lesdites agrafes sont fixées audit élément de jonction souple par moulage par injection.

9. Dispositif selon la revendication 1, **caractérisé en ce que** lesdites agrafes et/ou ledit élément de jonction souple sont fabriqués à partir de matières plastiques.

10. Dispositif selon la revendication 1, **caractérisé en ce que** ledit élément de jonction souple est une bande.

11. Dispositif selon la revendication 1, **caractérisé en ce que** ledit élément de jonction souple est un câble.

12. Dispositif selon la revendication 1, **caractérisé en ce que** ledit élément de jonction souple est massif en section transversale.

13. Dispositif selon la revendication 1, **caractérisé en ce que** ledit élément de jonction souple est une tresse d'éléments torsadés ou souples.

14. Procédé de fabrication d'un dispositif selon la revendication 1, **caractérisé en ce que** ledit élément de jonction souple est transporté pas à pas au travers d'un moule de coulée d'un dispositif de moulage par injection, l'étendue d'une largeur de pas correspondant à des espaces prédéterminés entre lesdites agrafes sur ledit élément de jonction et **en ce que** dans l'intervalle de temps entre lesdits pas de transport, ladite agrafe est moulée par injection sur ledit élément de jonction souple.

15. Procédé selon la revendication 14, **caractérisé en ce que** ledit élément de jonction souple est séparé après un nombre prédéterminé de pas.

16. Procédé selon les revendications 14 et 15, **caractérisé en ce qu'**une pluralité desdits éléments de jonction souples parallèles sont transportés pas à pas au travers d'une pluralité de moules parallèles dudit dispositif de moulage par injection.

17. Procédé selon la revendication 16, **caractérisé en ce que** lesdits éléments souples parallèles sont chacun transportés avec une largeur égale desdits pas.

18. Application du dispositif selon la revendication 1, destinée à fixer un faisceau de câbles sur des trous d'une structure de support, ledit élément de jonction souple étant compris dans ledit faisceau de câbles comme ledit câble.

19. Application selon la revendication 18, **caractérisée en ce que** lesdites agrafes sont disposées à des positions définies sur le côté extérieur dudit faisceau de câbles.

20. Application selon la revendication 17 ou 18, **caractérisée en ce que** lesdits trous sont oblongs en vue de la compensation de tolérances.
